# EUROPEAN PATENT APPLICATION

(11) **EP 4 717 380 A1**
(43) Date of publication of application: **01.04.2026**
(21) Application number: 25202026.8
(22) Date of filing: 12.09.2025
(51) Int. Cl.: B22F 10/80, B33Y 50/00, E05B 15/16, B22F 7/06, B22F 7/08, E05B 17/00, E05B 67/06, E05B 67/38, B22F 5/00, B22F 10/25, B23K 26/342

(54) **SECURITY DEVICE**

(30) Priority: 13.09.2024 GB 202413534
(71) Applicant: Zeal Innovation Ltd, Swansea Waterfront, Swansea SA1 8QY (GB)
(72) Inventor: BARRON, Neil Anthony, Swansea, SA3 1PQ (GB)
(74) Representative: Marks & Clerk LLP

(57) **Abstract**

A security device comprising a metallic first member and a second member interfacing with the first member, the first member comprises metallic tracks metallurgically bonded to its surface, wherein the tracks comprise first tracks extending in a first direction and, adjacent an interface with the second member, second tracks extending in a second direction or in second directions, wherein the second direction or the second directions are parallel to or extend along an interface between the first member and the second member and the first direction is different from the second direction or from the second directions.

## Description

Embodiments described herein relate to security devices and particularly to the use of cut-resistant materials on a lock body of the security device. In an embodiment the cut-resistant material is provided in locations of the lock body that make cutting through the lock body to reach a recess in the lock body more difficult or to prevent it altogether.

According to an embodiment there is provided a security device comprising first tracks and second tracks metallurgically bonded to a surface of a metallic body, wherein the second tracks extend contiguous with or overlap end portions of the first track.

According to another embodiment there is provided a security device comprising a metallic first member and a second member interfacing with the first member, the first member comprises metallic tracks metallurgically bonded to its surface, wherein the tracks comprise first tracks extending in a first direction and, adjacent an interface with the second member, second tracks extending in a second direction or in second directions, wherein the second direction or the second directions are parallel to or extend along an interface between the first member and the second member and the first direction is different from the second direction or from the second directions.

In an embodiment the interface is planar. In another embodiment the interface is curved. In either case, the second direction or second directions in which the second tracks extend are such that the second tracks at least partially and preferably fully follow the interface, irrespective of the shape of the interface. In an embodiment the first member is a cylindrical member and the second tracks extend around a circumference of the cylindrical member. It will be appreciated that, in this embodiment, the second directions are all directions orthogonal to a longitudinal axis of the cylinder if the second track surrounds the cylinder or a subset of these directions if the second track only partially surrounds the cylinder.

In an embodiment the second tracks are contiguous with the interface to the second member.

In an embodiment security device is a padlock or a D- or U-lock and wherein the first member is an elongated shackle.

In an embodiment the second tracks circumferentially extend around at least part or all of the circumference of the shackle.

In an embodiment the second member is a body of the lock and wherein the second tracks are close to or contiguous with the body of the lock.

In an embodiment the second tracks are spaced apart from the body of the lock by no more than 1.6 mm, preferably by no more than 1 mm and most preferably by no more than 0.8mm.

In an embodiment the second tracks comprise a plurality of adjacent or overlapping tracks.

In an embodiment the second tracks are contiguous with or overlap end portions of the first tracks.

In an embodiment there is provided a method of increasing the cut resistance of a metallic body comprising metalurgically bonding first tracks and second tracks to a surface of the metallic body, wherein the second tracks extend contiguous with or overlap end portions of the first track.

In an embodiment the first tracks are bonded to the surface after the second tracks.

In an embodiment there is provided a computer-readable medium storing data which defines a digital representation of the security device of any of claims 1 to 7.

In an embodiment the computer-readable medium further stores computer program instructions configured to cause an additive manufacturing machine to apply the first tracks and the second tracks to a pre-existing first member when executed by the additive manufacturing machine.

Embodiments reinforce an operative component of a locking device with a cut-resistant material. According to embodiments a security device has a metallic elongate body with at least one end attachable to a lock unit. The body has at least one track of material of the kind referred to above extending longitudinally on the surface thereof and metallurgically bonded therewith. The material of the track has particles of a hard cut-resistant material that may be dispersed in a self-fluxing matrix of lower melting point than that of the body and comprising one of nickel, iron and cobalt in composition with chromium, silicon and boron. The tracks are normally applied to the elongate body by welding, preferably laser welding or laser cladding, but plasma arc welding or brazing might also be used. The lower melting point prevents melting of the elongate body while enabling the metallurgical bond. Tungsten carbide is the preferred hard cut-resistant material, but other materials might be used, such as silicon carbide, cubic boron nitride, or industrial or synthetic diamond.

Preferred matrices used in the track material in devices of the invention are based on nickel or cobalt, ideally with a hardness of around 50-60 HRC (Rockwell C hardness). Particularly preferred matrices are based on nickel with the optional inclusion of iron. In the matrix forming the tracks in elements of the invention the hardness of the cut-resistant particles is preferably in the range 2500 to 3000Hv (Vickers Hardness), and that of the matrix 500 to 600Hv.

The base material of the elongate body is normally steel, typically a low carbon hardened steel. A preferred material is a low carbon steel case hardened to 58-60 HRC.

The matrix with the dispersed particles can be in solid or powder form. In solid form it is delivered as a rod or wire which must be melted in the application of the tracks. This can generate more heat at the area of application resulting in migration of the body material into the tracks. A preferred application process uses a powder form which is delivered and welded directly to the body to form the tracks. Migration of the material of the elongate body into the matrix should be kept to a minimum, preferably to no more than 10% by volume of the track material.

The particles in the matrix forming the tracks in elements of the invention are preferably in spherical form and a typical size variation is in the range 50 - 160µm. The particles can also be in cast and crushed form. In this form the dimensions of the particles will typically vary between 50 and 200µm. A mixture of spherical and crushed particle could also be used in some embodiments. The size variation of the particles determines the density of the particles in the matrix, but too small particles can melt or disintegrate when the tracks are applied to the body, and too large particles may not be retained. The particles will normally comprise 40-65% by volume of the track material.

The dimensions of the or each track on the elongate body in elements of the invention will vary depending upon the dimensions of the respective body. However, on a body of circular cross section with a diameter up to 5cms, a typical maximum track thickness will no more than 2mm and preferably no more than 1mm, and a typical width will be in the range 3-10mm.

In all embodiments the finished product may be plated, or coated or encapsulated in a polymeric material, preferably a low pressure plant based polymer, to give corrosion resistance and longevity as well as disguising the location and pattern of the reinforcing tracks.

Devices of the invention can be used in a variety of portable security devices such as cycle and motorcycle locks; for example padlocks and D-locks or U-locks of the kind described in European Patent Nos.3193405 and 3584394, and also in door locks, safes, catalytic converter locks given as examples of many other applications.

The invention will now be described by way of example and with reference to the accompanying schematic drawings, wherein:
Figure 1 is a plan view of a security device with a weld plated elongate member;
Figure 2 is a view of the security device in a disassembled for;
Figures 3 and 4 illustrate the forms of tungsten carbide dispersed in the matrix in the track 20 and 25 shown in Figs. 1 and 2.

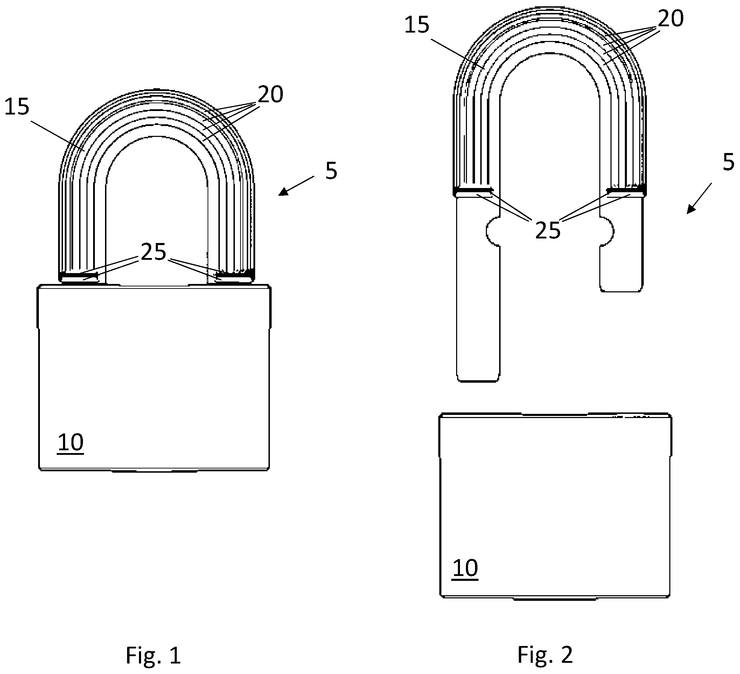

Fig. 1 shows a security device 5, in the specific example a padlock, with a lock body 10 and an elongate member 15. In the example the elongate member is a shackle. A part of the elongate member 15 that is not received in the lock body 10 in the assembled and locked state shown in Fig. 1 is plated with tracks of hard and cut resistant material.

In embodiments the tracks may be formed from one or more of cut-resistant materials including on or more of cermet; tungsten carbide; titanium carbide; titanium nitride, and titanium carbon nitride. It is known to use a material such as tungsten carbide to form a wear resistant layer on a surface. Tungsten carbide particles, for example, are in one embodiment, dispersed in a self-fluxing matrix or alloy based on nickel, iron or cobalt in composition with chromium, silicon and boron as discussed in a conference paper entitled "High temperature erosion wear of cermet particles reinforced self-fluxing alloy matrix HVOF sprayed coatings" published in Materials Science in September 2015. Products bearing such layers or coatings are available from various companies such as ASB Industries Inc. of Barburton, Ohio, USA; B&B Precision Engineering of Huddesfield, UK, and Oelikon Metco of Pfafficon, Switzerland.

In one embodiment the material of the track comprises a hard cut-resistant material such as tungsten carbide in a low melting point self-fluxing matrix or alloy of the kind referred to above. The self-fluxing matrix is, in one embodiment, based on nickel in combination with chromium, silicon and boron. A preferred composition includes 15% chromium; 3% boron; 4.5% silicon; 0.65% carbon, and 3% iron, with the balance being nickel, although some ceramic is normally also included.

In the embodiments different tracks 20 an 25 extending in different directions relative to the elongate member 15 are provided. The majority of the surface of the elongate member 15 is clad with tracks 20 that, in the embodiment, extend parallel to the elongate axis of the elongate member 15. It will be understood from the following, however, that it is not essential that the tracks 20 so extend and that, instead, the tracks could extend at an angle relative to the elongate axis of the elongate member as long as the direction in which they extend has a component that extends in the direction of an adjacent part of the elongate axis of the elongate member.

Further tracks 25 are provided. These tracks extend circumferentially around the elongate member 15.

The tracks 15 are deposited on the elongate member by weld deposition. For this purpose both the material that is to form the tracks 15 and the underlying metallic material of the elongate member are locally molten. It was noticed that the thus created melt pool can be moved by the laser used for melting the materials. More specifically, it was noticed that the laser used for melting pushes the melt pool away from the direction in which the laser impacts the surface of the elongate member. Whilst along an individual track such movement of metal/the melt pool does not matter and, in particular, does not negatively affect the accuracy or homogeneity of the tracks metallurgical bonded to the elongate member. However, if the direction of manufacture of adjacent tracks differs, for example if a first track of the tracks 20 is formed starting in the right half of the elongate member 15 in Fig. 2 and working towards the left half, then the end of the thus formed track 20 in the left half of the elongate member will protrude somewhat beyond the finishing point at which the laser has stopped melting the surface of the elongate member, because the melt pool had been pushed ahead of the laser. Conversely, a track that has bene formed starting in the left half of the elongate member 15 adjacent the end of the first formed track and working towards the right half will have a starting point that is somewhat forward of the point at which the laser has started melting the surface material of the elongate member. This is again because the laser has pushed the melt pool ahead of itself. The result of this is that in situations in which different or even opposing directions of manufacture/deposition welding are chosen, the end points of individual tracks or even of adjacent tracks may not align. Whilst this may not be problematic on all parts of the elongate member 15, misalignment of track ends on a part of the elongate member that, when inserted into the lock body 10 lie immediately adjacent or are contiguous with the lock body 10, can be problematic. Even if only some of the track extend too far toward the lock body 10 they may prevent insertion of the elongate member 15 into the lock body 10 in the desired/locking manner. Equally, if even some of the tracks end on a position of the elongate member 15 that falls short of the lock body 10 when assembled, a area in which the elongate member may more readily be cut using a disc cutter or angle grinder may be created.

It was realised that, the melt pool is pushed ahead of the laser in the working direction of the laser. By providing tracks 25 that extend in a circumferential direction around the elongate member, any misalignment of the track end from a theoretically desired track end therefore appears in the circumferential direction. Any such misalignment does not negatively affect the fit of the elongate member 15 in the lock body 10. By providing the tracks 25 the overall manufacturing accuracy of the security device 5 is consequently improved.

It was further realised that the tracks 25 may be provided before or after the tracks 20 have been provided on the elongate member. A single track 25 is provided at either end of the elongate member in an embodiment. In another embodiment more than one track 25, for example two adjacent tracks, is provided at each end of the elongate member 15.

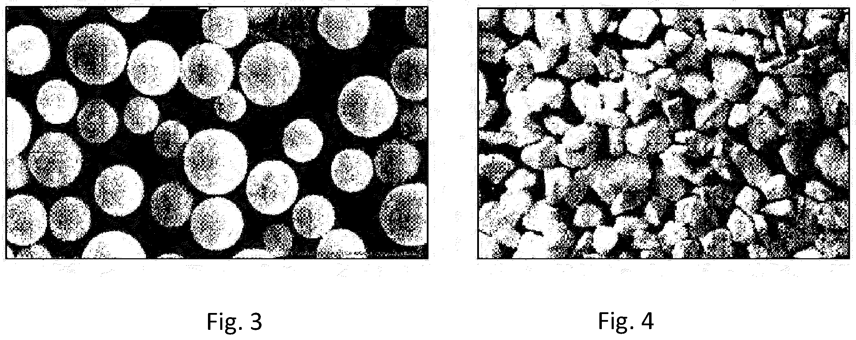

Fig. 3 shows spherical particles of tungsten carbide (WC) dispersed in a nickel based matrix. The dispersal is random, and the smaller particles will tend to occupy spaces between the larger ones. The size of the particles will vary in the range 50-160µm diameter. The matrix is nickel based and contains silicon and boron. Composites of such particles in this matrix are available from Stoody Industrial Welding Supply, Inc. of San Diego California, USA. The content of WC particles in the matrix is around 65% by volume. Fig. 4 shows cast and crushed particles of WC in the same nickel based matrix as that of Fig. 3. As can be seen, the density of the particles appears greater than that in Fig 3, at around 80%

Figs. 1 and 2 show an elongate element 15 of substantially circular cross section, but any suitable cross section can be adopted. The tracks 20, although shown in Figs. 1 and 2 as overlapping each other such as to provide a continuous coverage of tracks 20 covering the elongate member 15. In other embodiments tracks 20 may be spaced appart from each other without overlap or may only overlap each other in fewer than all sections of the elongate member 15. For example, the tracks 20 may only overlap each other in areas that are most likely to come under attack with a cutting disk.

Although Figs. 1 and 2 illustrate a padlock as an example, other embodiments comprising elongate member 15 with tracks 25 may be D-locks or U-locks commonly used for cycles and motorcycles or single leg stud type locks in which only a single end of an elongate member is locked into a lock body. More generally, any security device comprising a rigid member that can be plated with track in the above described manner and that require precise termination of the tracks at an interface position to another component of the security device may use the tracks described above.

It will be appreciated by a person skilled in the art that variations and/or modifications (e.g., additions, omissions, substitutions, etc.) may be made to the described and/or illustrated embodiments to provide other embodiments. The described and/or illustrated embodiments should therefore be considered in all respects as illustrative, not restrictive. Other features and aspects of the disclosure will become apparent by consideration of the detailed description and accompanying drawings. Any feature(s) described herein in relation to one aspect or embodiment may be combined with any other feature(s) described herein in relation to any other aspect or embodiment as appropriate and applicable. As used herein, term of degree such as "generally", "about", "substantially", or the like, are used, depending on context, to account for manufacture tolerance, degradation, trend, tendency, imperfect practical condition(s), etc.

## Claims

1. A security device comprising first tracks and second tracks metallurgically bonded to a surface of a metallic body, wherein the second tracks extend contiguous with or overlap end portions of the first track

2. A security device comprising:
a metallic first member and a second member interfacing with the first member;
the first member comprises metallic tracks metallurgically bonded to its surface, wherein the tracks comprise first tracks extending in a first direction and, adjacent an interface with the second member, second tracks extending in a second direction or in second directions, wherein the second direction or the second directions are parallel to or extend along an interface between the first member and the second member and the first direction is different from the second direction or from the second directions.

3. The security device of claim 1, wherein the second tracks are contiguous with the interface to the second member.

4. The security device of claim 2, wherein security device is a padlock or a D- or U-lock and wherein the first member is an elongated shackle.

5. The security device of claim 3, wherein the second tracks circumferentially extend around at least part or all of the circumference of the shackle.

6. The security device of claim 4, wherein the second member is a body of the lock and wherein the second tracks are close to or contiguous with the body of the lock.

7. The security device of any preceding claim, wherein the second tracks comprise a plurality of adjacent or overlapping tracks.

8. The security device of any preceding claim, wherein the second tracks are contiguous with or overlap end portions of the first tracks.

9. A method of increasing the cut resistance of a metallic body comprising:
metalurgically bonding first tracks and second tracks to a surface of the metallic body, wherein the second tracks extend contiguous with or overlap end portions of the first track.

10. The method of claim 8, wherein the first tracks are bonded to the surface after the second tracks.

11. A computer-readable medium storing data which defines a digital representation of the security device of any of claims 1 to 8.

12. The computer-readable medium of claim 11, further storing computer program instructions configured to cause an additive manufacturing machine to apply the first tracks and the second tracks to a pre-existing first member when executed by the additive manufacturing machine.
